(19) Europäisches Patentamt
European Patent Office
Office européen des brevets

(11) **EP 1 989 086 B1**

(12) **EUROPÄISCHE PATENTSCHRIFT**

(45) Veröffentlichungstag und Bekanntmachung des Hinweises auf die Patenterteilung:
**20.05.2015 Patentblatt 2015/21**

(21) Anmeldenummer: 07704629.0

(22) Anmeldetag: **19.02.2007**

(51) Int Cl.:
*B60T 8/17* (2006.01)          *B60T 8/172* (2006.01)

(86) Internationale Anmeldenummer:
**PCT/EP2007/051545**

(87) Internationale Veröffentlichungsnummer:
**WO 2007/096319 (30.08.2007 Gazette 2007/35)**

(54) **VERFAHREN UND VORRICHTUNG ZUR BESTIMMUNG DES ROLLWINKELS EINES KRAFTRADES**

METHOD AND DEVICE FOR DETERMINING THE ROLL ANGLE OF A MOTORCYCLE

PROCÉDÉ ET DISPOSITIF DE DÉTERMINATION DE L'ANGLE DE ROULIS D'UN MOTOCYCLE

(84) Benannte Vertragsstaaten:
**DE FR**

(30) Priorität: 22.02.2006 DE 102006008204
18.03.2006 DE 102006012533
06.10.2006 DE 102006047737
23.12.2006 DE 102006061483

(43) Veröffentlichungstag der Anmeldung:
**12.11.2008 Patentblatt 2008/46**

(73) Patentinhaber: **Continental Teves AG & Co. oHG
60488 Frankfurt (DE)**

(72) Erfinder:
• **SEINIGER, Patrick
64289 Darmstadt (DE)**
• **WINNER, Hermann
76467 Bietigheim (DE)**
• **KOLB, Friedrich
67596 Dittelsheim-Hessloch (DE)**
• **KOUKES, Vladimir
64297 Darmstadt (DE)**
• **OLEJNIK, Peter
61191 Rosbach (DE)**
• **ECKERT, Alfred
55129 Mainz-Hechtsheim (DE)**
• **KREMER, Michael
64846 Darmstadt (DE)**

(56) Entgegenhaltungen:
EP-A- 1 002 709      DE-A1- 10 350 046
DE-A1- 10 350 047    JP-A- 2001 074 449

**Beschreibung**

Die Erfindung betrifft ein Verfahren zur Bestimmung des Rollwinkels eines Kraftrades gemäß Oberbegriff von Anspruch 1 sowie eine Vorrichtung zur Bestimmung des Rollwinkels eines Kraftrades gemäß Oberbegriff von Anspruch 15.

Moderne Motorrad-Antiblockiersysteme (ABS) und Integralbremssysteme sind bei Geradeausbremsungen und Bremsungen bei mittleren Schräglagen sehr weit entwickelt und damit relativ sicher. Bei größeren Schräglagen müssen die Parameter des Bremssystems (z.B. Bremskraftverteilung, Bremsdruckgradient und Regelstrategie) an die Kurvenfahrt angepasst werden, um auch hier ein sicheres Bremsen zu gewährleisten. Die Kenntnis des Schräglagenwinkels (Rollwinkels) ist dazu essentiell. Aber auch Kurvenlichtsysteme, Fahrwerksysteme und zukünftige Fahrdynamikregelsysteme erfordern den Rollwinkel als eine Eingangsgröße. Bekannte Systeme zur Messung des Rollwinkels während der Fahrt sind entweder zu ungenau oder zu teuer für Serienanwendungen. Die zugrunde liegenden Messprinzipien zur Bestimmung des Rollwinkels sind entweder nur für stationäre oder nur für instationäre Fahrsituationen geeignet.

Aus der Schrift DE 100 39 978 C2 geht eine Vorrichtung zur Messung des Neigungswinkels gegen die Richtung der Gravitation oder der Richtung der resultierenden Aufstandskraft hervor, welche eine Sensoranordnung und elektrisch leitend verbunden eine Auswerteeinheit umfasst, wobei die Sensoranordnung zwei Beschleunigungssensoren aufweist und die Auswerteeinheit anhand der gemessenen Beschleunigungen den Neigungswinkel berechnet.

In der Schrift DE 42 44 112 C2 wird ein Antiblockiersystem für Motorräder offenbart, welches unter anderem eine Hilfsschaltung umfasst, die über zwei Beschleunigungssensoren den Schräglagenwinkel des Fahrzeugs berechnet.

Ein Verfahren zur Bestimmung des Rollwinkels und des Nickwinkels eines zweirädrigen Fahrzeuges mit Hilfe eines adaptiven Filters wird in der WO 02/01151 beschrieben.

In der EP 1 002 709 A2 wird ein Verfahren zur Schätzung des Lagewinkels eines Fahrzeugs zur Erkennung eines seitlichen Überschlagens des Fahrzeugs beschrieben, wobei der Lagewinkel anhand der erfassten Winkelrate und der Quer- oder Längsbeschleunigung des Fahrzeugs bestimmt wird.

Der Erfindung liegt die Aufgabe zugrunde, ein alternatives Verfahren und eine alternative Vorrichtung zur Bestimmung des Rollwinkels eines Kraftrades bereitzustellen, welches/welche eine zuverlässige Bestimmung des Rollwinkels bei gleichzeitig hoher Genauigkeit ermöglicht. Dabei sollen die Kosten zur Umsetzung des Verfahrens bzw. zur Herstellung der Vorrichtung gering sein.

Diese Aufgabe wird erfindungsgemäß durch das Verfahren gemäß Anspruch 1 sowie die Vorrichtung gemäß Anspruch 14 gelöst.

Dem erfindungsgemäßen Verfahren liegt der Gedanke zugrunde, die Ergebnisse bzw. Informationen aus zwei oder mehr unterschiedlichen Methoden zur Bestimmung eines Rollwinkels miteinander zu kombinieren, um so in allen Fahrsituationen (stationär oder instationär) unter Verwendung von kostengünstigen Sensoren einen hinreichend genauen Rollwinkel zu erhalten. Dazu wird anhand einer ersten Methode aus einer ermittelten Rollrate des Fahrzeugs eine erste Rollwinkelgröße bestimmt. Aus dem Produkt einer Gierrate und einer Fahrzeuggeschwindigkeit wird zumindest eine zweite Rollwinkelgröße bestimmt. Der Rollwinkel wird dann aus den mindestens zwei bestimmten Rollwinkelgrößen berechnet.

Gemäß einer bevorzugten Ausführungsform des erfindungsgemäßen Verfahrens wird der Rollwinkel durch Addition aus den Rollwinkelgrößen berechnet.

Außerdem ist es bevorzugt, dass die Rollwinkelgrößen gefiltert werden, bevor aus ihnen der Rollwinkel berechnet wird. Erfindungsgemäß wird die Rollrate mit einem Hochpassfilter gefiltert, bevor sie zur Berechnung der ersten Rollwinkelgröße herangezogen wird. So wird die Fehlertoleranz des erfindungsgemäßen Verfahrens erhöht. Es hat sich als besonders vorteilhaft herausgestellt, für die Filterung einen Hochpassfilter mit einer Eckfrequenz von etwa 0,01 Hz zu verwenden.

Die Rollrate wird bevorzugt mittels eines Drehratensensors, welcher am Fahrzeug angebracht ist, ermittelt. Die Position des Drehratensensors am Motorrad ist nicht relevant, da die Drehraten am gesamten Fahrzeug gleich sind.

Bevorzugt wird aus der Rollrate durch zeitliche Integration eine erste Rollwinkelgröße berechnet. Für kleine Nickwinkel gleichen sich motorradfeste Rollrate und fahrbahnfeste Rollrate und eine Integration der motorradfesten Rollrate ergibt kurzzeitig eine den Rollwinkel repräsentierende Rollwinkelgröße.

Gemäß einer bevorzugten Ausführungsform des erfindungsgemäßen Verfahrens wird die erste Rollwinkelgröße mit einem Hochpassfilter gefiltert, bevor sie zur Berechnung eines Rollwinkels herangezogen wird. Hierdurch werden Verfälschungen des Rollwinkels durch Messfehler des Drehratensensors verringert. Besonders bevorzugt wird ein Hochpassfilter mit einer Eckfrequenz von etwa 0,05 Hz verwendet.

Außerdem ist es vorteilhaft, die zweite Rollwinkelgröße mit einem Tiefpassfilter zu filtern, bevor sie zur Berechnung des Rollwinkels herangezogen wird, da die Zusammenhänge zwischen den fahrdynamischen Kenngrößen, welche der Bestimmung der zweiten Rollwinkelgröße zugrunde liegen, nur bei stationärer Kurvenfahrt gelten. Besonders bevorzugt wird ein Hochpassfilter mit einer Eckfrequenz von etwa 0,05 Hz verwendet.

Bevorzugt beträgt die Eckfrequenz des Tiefpassfilters, welcher zur Filterung der zweiten Rollwinkelgröße verwendet wird, den gleichen oder etwa den gleichen Wert wie die Eckfrequenz des Hochpassfilters, welcher zur Filterung der ersten Rollwinkelgröße verwendet wird. Hierdurch wird eine lückenlose Bestimmung des Rollwinkels über den gesamten Frequenzbereich sichergestellt. Besonders bevorzugt liegt die Trennfrequenz im Bereich von etwa 0,01 Hz bis etwa 0,10 Hz. Ganz besonders bevorzugt beträgt die verwendete Trennfrequenz des Hochpass- und des Tiefpassfilters 0,05 Hz. Die Trennfrequenz wird vorteilhafterweise so gering wie möglich gewählt.

Bei einer Addition von mehr als zwei Rollwinkelgrößen werden die Eckfrequenzen der verwendeten Hochpass-, Bandpass und Tiefpassfilter derart gewählt, dass eine Bestimmung des Rollwinkels über den gesamten Frequenzbereich gegeben ist.

Gemäß einer bevorzugten Ausführungsform des erfindungsgemäßen Verfahrens wird die zweite Rollwinkelgröße entweder aus dem Produkt einer Gierrate und einer Fahrzeuggeschwindigkeit oder aus einer Gierrate, einer Fahrzeuggeschwindigkeit und einer Vertikalbeschleunigung des Fahrzeugs oder aus einer Vertikalbeschleunigung des Fahrzeugs oder aus einer Vertikal- und einer Querbeschleunigung des Fahrzeugs ermittelt. Besonders bevorzugt wird die Gierrate durch einen Drehratensensor bestimmt. Die Fahrzeuggeschwindigkeit wird besonders bevorzugt aus den Messgrößen mindestens eines Raddrehzahlsensors bestimmt.

Die Rollwinkelgröße(n) wird/werden bevorzugt anhand einer oder mehrerer in einem Steuergerät abgelegten Kennlinien oder mindestens eines in einem Steuergerät abgelegten Kennfeldes aus der/den jeweiligen fahrdynamischen Kenngröße(n) bestimmt. Besonders bevorzugt wird die Bestimmung über ein Kennfeld oder eine Kennlinie im Falle einer Ermittlung der zweiten Rollwinkelgröße aus Gierrate und Fahrzeuggeschwindigkeit vorgenommen.

Alternativ wird/werden die zweite(n) Rollwinkelgröße(n) bevorzugt anhand eines Berechnungsalgorithmus aus der/den jeweiligen fahrdynamischen Kenngröße(n) berechnet.

Gemäß einer Weiterbildung des erfindungsgemäßen Verfahrens werden aus fahrdynamischen Kenngrößen zwei oder mehr zweite Rollwinkelgrößen auf unterschiedliche Art bestimmt. Diese auf verschiedene Weisen bestimmten zweiten Rollwinkelgrößen werden dann für eine Plausibilitätsprüfung des Rollwinkels verwendet. Besonders bevorzugt werden zur Plausibilitätsprüfung die auf unterschiedliche Arten und/oder aus verschiedenen fahrdynamischen Kenngrößen bestimmten zweiten Rollwinkelgrößen untereinander verglichen. Alternativ wird jeweils aus der ersten Rollwinkelgröße und einer der zweiten Rollwinkelgrößen ein Rollwinkel berechnet, und diese Rollwinkel untereinander verglichen. Ganz besonders bevorzugt wird mindestens eine der zweiten Rollwinkelgrößen aus mindestens einer Beschleunigung des Fahrzeugs bestimmt.

Bevorzugt wird anhand des Vergleichs der auf unterschiedliche Arten bestimmten zweiten Rollwinkelgrößen oder Rollwinkel eine Fehlfunktion eines verwendeten Sensors erkannt. Weicht die aus den Werten eines Sensors berechnete zweite Rollwinkelgröße von den anderen Rollwinkelgrößen ab, so liegt möglicherweise eine Fehlfunktion des Sensors vor. So ist eine schnelle und einfache Erkennung eines fehlerhaften Sensors möglich. Besonders bevorzugt wird so ein Fehler eines Beschleunigungssensors erkannt.

Ebenso ist es bevorzugt, die ermittelten Beschleunigungswerte zur Bestimmung eines Offsets des Drehratensensors zur Bestimmung der Rollrate zu verwenden.

Vorteilhafterweise wird mit Hilfe des so bestimmten Offsets ein Linearitätsfehler der Rollrate bestimmt. Dieser kann dann zur Korrektur der Rollrate verwendet werden, und so wird die Genauigkeit des erfindungsgemäßen Verfahrens weiter verbessert.

Bevorzugt werden die Beschleunigungssensoren auch für die Berechnung des Rollwinkels bei Stillstand des Fahrzeuges verwendet.

Gemäß einer weiteren bevorzugten Ausführungsform des erfindungsgemäßen Verfahrens wird der Rollwinkel durch gewichtete Summation aus den mindestens zwei bestimmten Rollwinkelgrößen berechnet, wobei die entsprechenden Gewichtsparameter in Abhängigkeit von der aktuellen Fahrsituation angepasst werden. Die Fahrsituation wird dabei anhand von mindestens einer der folgenden Größen erkannt: Motordrehzahl, Motormoment, Lenkwinkel, Fahrzeuggeschwindigkeit, Fahrzeugbeschleunigung, Raddrehzahlen, Fahrbahnzustand, Rollrate, Gierrate, Rollwinkelbeschleunigung, Gierwinkelbeschleunigung, Rollwinkel, Radschlupf, Fahrzeugbeladung, Fahrbahnneigung. Der berechnete Rollwinkel wird besonders bevorzugt während der Optimierung der Gewichtsparameter als Eingangsgröße zur Beurteilung der Fahrsituation herangezogen (iterative Berechnung des Rollwinkels).

Bevorzugt wird neben der ersten Rollwinkelgröße, welche aus der Rollrate bestimmt wird, eine zweite Rollwinkelgröße aus einer Vertikal- und einer Querbeschleunigung des Fahrzeugs bestimmt, sowie eine weitere zweite Rollwinkelgröße aus dem Produkt einer Gierrate und einer Fahrzeuggeschwindigkeit bestimmt, und aus den drei, insbesondere mit einem Hoch- oder Tiefpassfilter gefilterten, Rollwinkelgrößen durch gewichtete Summation mit Gewichtsparametern der Rollwinkel berechnet, wobei die Gewichtsparameter in Abhängigkeit von der aktuellen Fahrsituation angepasst werden, welche anhand mindestens einer der folgenden Größen erkannt wird: Motordrehzahl, Motormoment, Lenkwinkel, Fahrzeuggeschwindigkeit, Fahrzeugbeschleunigung, Raddrehzahlen, Fahrbahnzustand, Rollrate, Gierrate, Rollwinkelbeschleunigung, Gierwinkelbeschleunigung, Rollwinkel, Radschlupf, Fahrzeugbeladung und Fahrbahnneigung.

Es ist ebenso bevorzugt, dass die Eigenschaften der zur Filterung der Rollwinkelgrößen verwendeten Filter in Abhängigkeit von der aktuellen Fahrsituation gewählt werden. Besonders bevorzugt werden die Trennfrequenzen der Filter in Abhängigkeit von der aktuellen Fahrsituation gewählt.

Der erfindungsgemäßen Vorrichtung liegt der Gedanke zugrunde, durch eine addierende Schaltung mindestens zwei Rollwinkelgrößen zu einem Rollwinkel aufzuaddieren, wobei eine erste Rollwinkelgröße aus einer Rollrate des Fahrzeugs bestimmt wird und eine zweite Rollwinkelgröße mit Hilfe mindestens einer fahrdynamischen Kenngröße bestimmt wird.

Gemäß einer Weiterbildung der erfindungsgemäßen Vorrichtung umfasst diese mindestens eine Auswerteeinheit, in welcher eine integrierende Schaltung enthalten ist, mit welcher aus der Rollrate durch Integration die erste Rollwinkelgröße bestimmt wird. Dabei umfasst die Vorrichtung besonders bevorzugt einen Filter, mit welchem die Rollrate gefiltert wird, bevor sie aufintegriert wird.

Die erfindungsgemäße Vorrichtung umfasst vorteilhafterweise mindestens eine Auswerteeinheit mit einem Hochpassfilter, mit welchem die erste Rollwinkelgröße gefiltert wird, bevor sie zur Berechnung des Rollwinkels verwendet wird.

Des Weiteren umfasst die Vorrichtung in mindestens einer Auswerteeinheit bevorzugt einen Tiefpassfilter, mit welchem auch die zweite Rollwinkelgröße gefiltert wird, bevor sie zur Berechnung des Rollwinkels herangezogen wird.

Bevorzugt besitzt der Tiefpassfilter zur Filterung der zweiten Rollwinkelgröße die gleich oder etwa gleich Eckfrequenz wie der Hochpassfilter zur Filterung der ersten Rollwinkelgröße. Hierdurch wird bei der nachfolgenden Addition der Rollwinkelgrößen eine lückenlose Bestimmung des Rollwinkels über den gesamten Frequenzbereich sichergestellt.

Gemäß einer bevorzugten Ausführungsform der erfindungsgemäßen Vorrichtung umfasst mindestens eine Auswerteeinheit eine Schaltung, mit welcher aus einer Gierrate und einer Fahrzeuggeschwindigkeit, oder aus einer Gierrate, einer Fahrzeuggeschwindigkeit und einer Vertikalbeschleunigung des Fahrzeugs, oder aus einer Vertikalbeschleunigung des Fahrzeugs, oder aus einer Vertikal- und einer Querbeschleunigung des Fahrzeugs die zweite Rollwinkelgröße bestimmt wird.

Bevorzugt ist das Mittel zur Ermittlung der Rollrate und/oder das Mittel zur Ermittlung der Gierrate des Fahrzeugs ein oder mehrere Drehratensensoren. Besonders bevorzugt wird/werden ein/die Drehratensensor(en) verwendet, welcher bereits im Rahmen von Fahrdynamik-Regelsystemen in Kraftfahrzeugen bekannt ist/sind.

Das Mittel zur Ermittlung der Geschwindigkeit des Fahrzeugs ist bevorzugt mindestens ein Raddrehzahlsensor. Ein solcher ist üblicherweise im Rahmen eines Antiblockiersystems bereits im Fahrzeug vorhanden.

Gemäß einer bevorzugten Ausführungsform der erfindungsgemäßen Vorrichtung ist das Mittel zur Ermittlung mindestens einer Beschleunigung ein Beschleunigungssensor oder eine Gruppe von Beschleunigungssensoren. Besonders bevorzugt handelt es sich dabei um einen Sensor eines fahrdynamischen Regelsystems, ganz besonders bevorzugt um einen Sensor eines elektronischen Stabilitätsprogramms (ESP). Solche Sensoren sind technisch ausgereift und damit ohne zusätzliche Entwicklungskosten einsetzbar.

Ein Vorteil der Erfindung liegt darin, dass unter Verwendung von bereits im Stand der Technik bekannten Sensoren eine kostengünstige und dabei genaue Bestimmung des Rollwinkels des Fahrzeuges möglich ist.

Die Erfindung umfasst auch die Verwendung eines erfindungsgemäßen Verfahrens in mindestens einem der folgenden Systeme: elektronisch gesteuertes Bremssystem, Kurvenlichtsystem, Fahrwerksystem, elektrisches Lenksystem und Fahrdynamikregelsystem.

Weitere bevorzugte Ausführungsformen der Erfindung ergeben sich aus den Unteransprüchen und der nachfolgenden Beschreibung anhand von Figuren.

Es zeigen

Fig. 1     eine schematische Darstellung eines Motorrades in Schräglage,

Fig. 2     eine schematische Darstellung eines ersten Ausführungsbeispieles eines erfindungsgemäßen Verfahrens,

Fig. 3     eine schematische Darstellung eines zweiten Ausführungsbeispieles eines erfindungsgemäßen Verfahrens,

Fig. 4     eine schematische Darstellung eines dritten Ausführungsbeispieles eines erfindungsgemäßen Verfahrens,

Fig. 5     eine schematische Darstellung eines Verfahrens zur Bestimmung eines Rollwinkels,

Fig. 6     eine schematische Darstellung eines vierten Ausführungsbeispieles eines erfindungsgemäßen Verfahrens, und

Fig. 7     in schematischer Darstellung ein beispielsgemäßes Verfahren zur adaptiven Berechnung eines Rollwinkels zur Verwendung in dem in Fig. 7 dargestellten, vierten Ausführungsbeispiel.

Kern der Vorrichtung bzw. des Verfahrens zur Bestimmung des Rollwinkels (Neigungswinkels) eines Fahrzeuges, insbesondere Motorrades, während der Fahrt ist die Kombination von mindestens zwei einzelnen Berechnungsergebnissen (für stationäre Fahrt und instationäre Fahrt), insbesondere mittels eines bestimmten Filters.

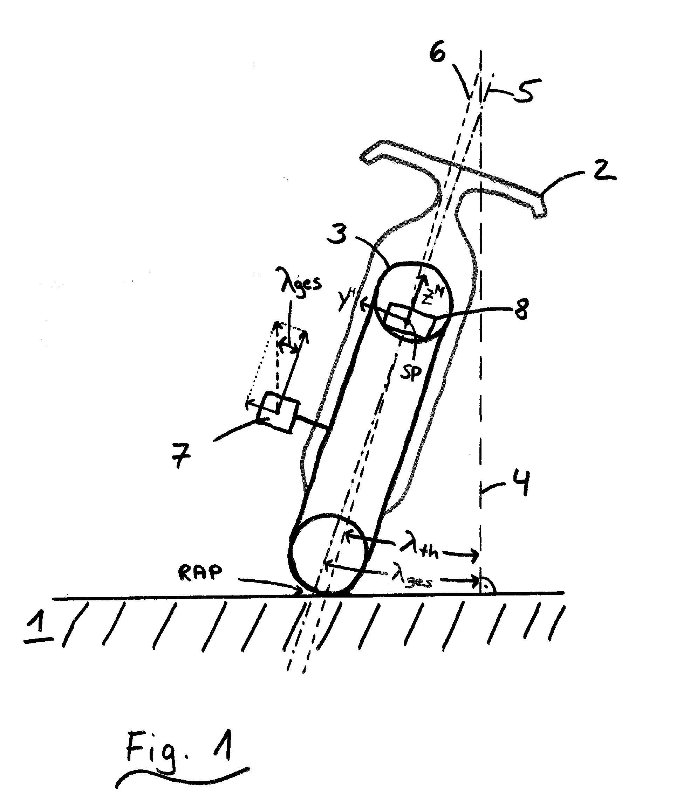

In Fig. 1 sind einige, für das erfindungsgemäße Verfahren relevante Größen schematisch dargestellt. Auf Fahrbahn 1 fährt ein Motorrad 2 in Schräglage. Ein Reifen 3 des Motorrades 2 ist geschnitten dargestellt. Linie 4 stellt die Richtung der Fahrbahnnormale dar, Linie 5 gibt die Symmetrieachse des Motorrads wieder. Im Schwerpunkt SP des Motorrads 2 ist das motorradfeste Koordinatensystem durch die motorradfeste Vertikal-Achse $z^M$, welche parallel zur Symmetrieachse des Motorrads 5 verläuft, und die dazu senkrechte, motorradfeste Quer-Achse $y^M$ angedeutet. Linie 6 gibt die in die y-z-Ebene projizierte Verbindungslinie zwischen Schwerpunkt SP des Motorrades 2 und Radaufstandspunkt bzw. Radaufstandslinie RAP wieder. Der Gesamtrollwinkel $\lambda_{ges}$ entspricht dem Winkel zwischen Fahrbahnnormale 4 und Fahrzeugsymmetrieebene 5, der physikalisch wirksame Rollwinkel $\lambda_{th}$ entspricht dem Winkel zwischen Fahrbahnnormale 4 und Linie 6. Am Motorrad 2 ist/sind beispielsgemäß seitlich ein oder mehrere Sensoren 7 angeordnet, z.B. ein Rollratensensor zur Bestimmung der motorradfesten Rollrate $\dot{\lambda}^M$ und/oder ein Gierratensensor zur Bestimmung der motorradfesten Gierrate $\dot{\psi}^M$. Alternativ oder zusätzlich können ein oder mehrere Sensoren oder ein Sensorcluster 8 am Motorrad 2, insbesondere im Bereich des Schwerpunktes SP, angeordnet sein, z.B. ein Gierratensensor zur Bestimmung der motorradfesten Gierrate $\dot{\psi}^M$ und/oder Beschleunigungssensor(en) zur Bestimmung der motorradfesten Vertikalbeschleunigung $\ddot{z}^M$ und/oder der motorradfesten Querbeschleunigung $\ddot{y}^M$. Vorteilhafterweise ist die Position des Rollratensensors bzw. die Position des Gierratensensors am Kraftrad 2 nicht relevant.

Bei üblichen Reifen liegt der Gesamtrollwinkel $\lambda_{ges}$ ungefähr 10% bis 20% über dem physikalisch wirksamen Rollwinkel $\lambda_{th}$. Die Differenz zwischen Gesamtrollwinkel $\lambda_{ges}$ und physikalisch wirksamen Rollwinkel $\lambda_{th}$ wird auch als Zusatzrollwinkel $\lambda_{ZS}$ bezeichnet. Es gilt also:

$$\lambda_{ges} = \lambda_{ZS} + \lambda_{th} \tag{1}$$

Bei üblichen Reifen liegt der reifenbreitenbedingte Zusatzrollwinkel $\lambda_{ZS}$, wie oben bereits erwähnt, in der Größenordnung von ungefähr 10% bis 20% von dem physikalisch wirksamen Rollwinkel $\lambda_{th}$. Da $\lambda_{ZS}$ klein gegenüber $\lambda_{th}$ ist, wird oftmals der Gesamtrollwinkel $\lambda_{ges}$ durch den physikalisch wirksamen Rollwinkel $\lambda_{th}$ angenähert:

$$\lambda_{ges} \approx \lambda_{th}$$

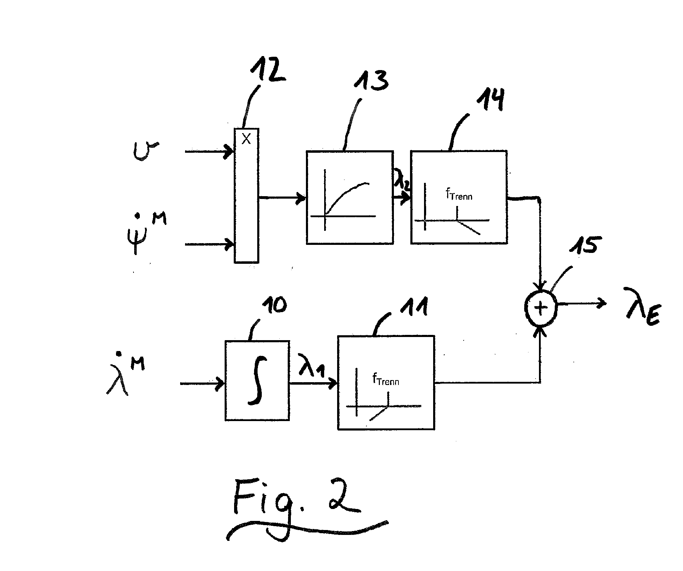

Für kleine Nickwinkel gleichen sich motorradfeste Rollrate $\dot{\lambda}^M$ und fahrbahnfeste Rollrate $\dot{\lambda}^{Fahrbahn}$. Eine Integration der Rollrate $\dot{\lambda}^M$ führt zum (Gesamt) Rollwinkel $\lambda_{ges}$ (dies entspricht in den Ausführungsbeispielen der Figuren 2, 3 und 4 der ersten Rollwinkelgröße $\lambda_1$).

In Fig. 2 ist ein erstes Ausführungsbeispiel eines erfindungsgemäßen Verfahrens schematisch dargestellt. Die zeitliche Integration 10 der motorradfesten Rollrate $\dot{\lambda}^M$ ist dabei ein erstes Berechnungsergebnis (erste Rollwinkelgröße $\lambda_1$). Beispielsgemäß wird das Berechnungsergebnis $\lambda_1$ mit Hochpassfilter 11, welcher z.B. eine Eckfrequenz $f_{Trenn}$ von 0,05 Hz besitzt, gefiltert. In dem dargestellten ersten Ausführungsbeispiel ergibt sich das zweite Berechnungsergebnis (zweite Rollwinkelgröße $\lambda_2$) als Funktion 13 des Produktes 12 von motorradfester Gierrate $\dot{\psi}^M$ und Fahrgeschwindigkeit v des Motorrades. Beispielsgemäß wird das Berechnungsergebnis $\lambda_2$ mit Tiefpassfilter 14, welcher z.B. die gleiche Eckfrequenz $f_{Trenn}$ wie der Hochpassfilter 11, z.B. 0,05 Hz, besitzt, gefiltert. Zur Bestimmung des Rollwinkels $\lambda_E$ des Motorrades werden das Berechnungsergebnis $\lambda_1$ der zeitlichen Integration 10 der motorradfesten Rollrate $\dot{\lambda}^M$ und das Berechnungsergebnis $\lambda_2$ einer Funktion 13 des Produktes 12 von motorradfester Gierrate $\dot{\psi}^M$ und Fahrgeschwindigkeit v addiert (Block 15).

Die Berechnung der ersten Rollwinkelgröße $\lambda_1$ durch Integration 10 der motorradfesten Rollrate $\dot{\lambda}^M$ gilt sowohl für stationäre als auch für instationäre Fahrt. Jedoch ist die Berechnung durch die Integration 10 des Messfehlers der Rollrate $\dot{\lambda}^M$ nicht langzeitstabil, d.h. das Ergebnis ist nur kurzzeitig gültig. Je nach Ausführung und Genauigkeit des verwendeten Rollratensensors beträgt die Steigerung des Messfehlers (so genannter "Drift") zwischen 1 Grad/Minute und 1 Grad/Sekunde.

Zur Vermeidung von Überlauffehlern bei der Integration 10 können gemäß eines nicht dargestellten Ausführungsbeispiels die Funktionen Integration 10 und Hochpassfilter 11 in ein äquivalentes Tiefpassfilter mit zusätzlicher Verstärkung übergeführt werden.

Die Berechnung der zweiten Rollwinkelgröße $\lambda_2$ aus motorradfester Gierrate $\dot{\psi}^M$ und Fahrzeuggeschwindigkeit v gilt nur für stationäre Kurvenfahrt. Funktion 13 ist abhängig von der Reifengeometrie und dem dynamischen Reifenverhalten des Motorrades.

Die verwendeten Filter 11, 14 sind üblicherweise PT$_1$-Glieder erster Ordnung. Die Trennfrequenz f$_{Trenn}$ liegt z.B. im Bereich von etwa 0,01 Hz bis etwa 0,10 Hz.

Zur Begründung des Zusammenhanges von Gierrate $\dot{\psi}^M$, Fahrzeuggeschwindigkeit v und Rollwinkel $\lambda$ wird folgendes erläutert:

Für stationäre Kurvenfahrt gilt, dass die motorradfeste Gierrate $\dot{\psi}^M$ durch die fahrbahnfeste Gierrate $\dot{\psi}^{Fahrbahn}$ multipliziert mit dem Kosinus des Gesamtrollwinkels $\lambda_{ges}$ und die Nickwinkelgeschwindigkeit $\dot{v}_{Fahrbahn}$ gegeben ist, wobei allerdings die Nickwinkelgeschwindigkeit $\dot{v}_{Fahrbahn}$ bei stationärer Fahrt Null ist ($\dot{v}_{Fahrbahn}$=0), so dass der zweite Term $\sin\lambda_{ges}\cdot\dot{v}_{Fahrbahn}$ in Gleichung (2) entfällt:

$$\dot{\psi}^M = \cos\lambda_{ges}\cdot\dot{\psi}^{Fahrbahn} - \sin\lambda_{ges}\cdot\dot{v}_{Fahrbahn} = \cos\lambda_{ges}\cdot\dot{\psi}^{Fahrbahn} \qquad (2)$$

Für stationäre Kurvenfahrt gelten weiterhin folgende Beziehungen zwischen der Querbeschleunigung $\ddot{y}^h$ im horizontierten Koordinatensystem (Koordinatensystem, welches bzgl. des motorradfesten Koordinatensystems um die x-Achse gedreht ist, so dass die horizontierte Querbeschleunigung $\ddot{y}^h$ parallel zur Fahrbahn verläuft), Fahrzeuggeschwindigkeit v, fahrbahnfester Gierrate $\dot{\psi}^{Fahrbahn}$, Tangens des wirksamen Rollwinkels $\lambda_{th}$ und Erdbeschleunigung g:

$$\ddot{y}^h = v\cdot\dot{\psi}^{Fahrbahn} \qquad (3)$$

$$\tan\lambda_{th} = \frac{v\cdot\dot{\psi}^{Fahrbahn}}{g} \qquad (4)$$

Einsetzen von (2) in (4) liefert:

$$\tan\lambda_{th} = \frac{v\cdot\dot{\psi}^{Fahrbahn}}{g} = \frac{v\cdot\dot{\psi}^M}{\cos\lambda_{ges}\cdot g} \qquad (5)$$

$$\sin\lambda_{th}\cdot\frac{\cos\lambda_{ges}}{\cos\lambda_{th}} = \frac{v\cdot\dot{\psi}^M}{g} \qquad (6a)$$

Unter der Annahme $\lambda_{ges} = \lambda_{th}$ kann dies auch vereinfacht werden zu:

$$\sin\lambda_{th} \approx \frac{v\cdot\dot{\psi}^M}{g} \qquad (6b)$$

Es gilt also, dass der Rollwinkel $\lambda_{th}$ eine Funktion f des Produktes $\dot{\psi}^M\cdot v$ von motorradfester Gierrate $\dot{\psi}^M$ und Fahrgeschwindigkeit v des Motorrades ist:

$$f(\lambda_{th}) = \frac{\dot{\psi}^M\cdot v}{g} \qquad (7)$$

Der funktionale Zusammenhang f($\lambda_{th}$) bzw. die obige Gleichung (7) ist nicht geschlossen lösbar. Daher wird eine numerisch ermittelte Kennlinie verwendet (Block 13), um aus dem Produkt (Block 12) von motorradfester Gierrate $\dot{\psi}^M$ und Fahrgeschwindigkeit v den Rollwinkel $\lambda_{th}$ (gemäß dem in Fig. 2 dargestellten Ausführungsbeispiel die Rollwin-

kelgröße $\lambda_2$) zu bestimmen.

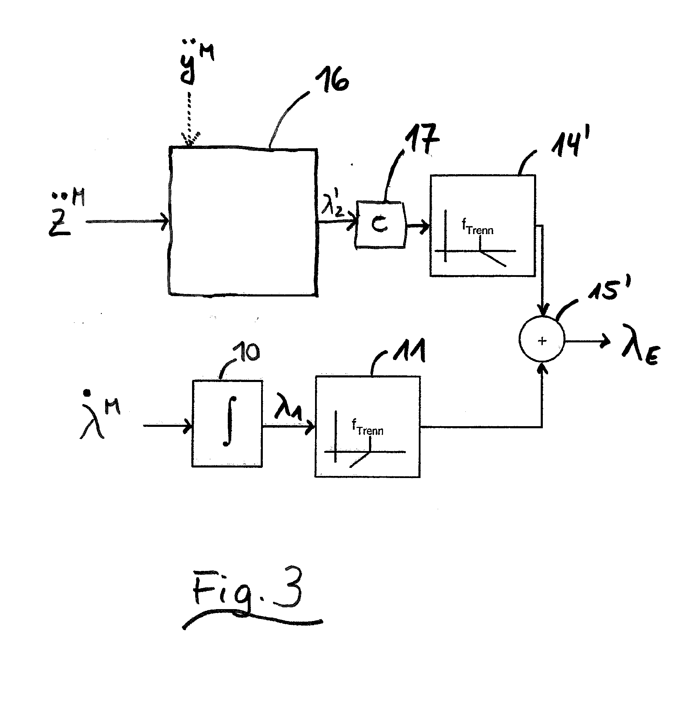

In Fig. 3 ist ein zweites Ausführungsbeispiel eines erfindungsgemäßen Verfahrens schematisch dargestellt. Auch in diesem Ausführungsbeispiel ist die zeitliche Integration 10 der motorradfesten Rollrate $\dot{\lambda}^M$ das erste Berechnungsergebnis (die erste Rollwinkelgröße $\lambda_1$), und auch hier wird beispielsgemäß die erste Rollwinkelgröße $\lambda_1$ mit einem Hochpassfilter 11, mit z.B. einer Eckfrequenz $f_{Trenn}$ von 0,05 Hz, gefiltert. Die im Rahmen des ersten Ausführungsbeispiels weiter oben gegebenen Erläuterung und Alternativen zur Berechnung der ersten Rollwinkelgröße $\lambda_1$ gelten hier entsprechend. Im Unterschied zum ersten Ausführungsbeispiel wird im zweiten Ausführungsbeispiel das zweite Berechnungsergebnis (die zweite Rollwinkelgröße $\lambda_2$) im wesentlichen aus der motorradfesten Beschleunigung in z-Richtung $\ddot{z}^M$ bestimmt (Block 16). Zur Berücksichtigung der Reifenbreite kann die zweite Rollwinkelgröße $\lambda_2{'}$ in Block 17 mit einem empirischen Faktor c multipliziert werden. Auch im zweiten Ausführungsbeispiel des erfindungsgemäßen Verfahrens wird das zweite Berechnungsergebnis $\lambda_2{'}$ mit einem Tiefpassfilter 14', mit z.B. der gleichen Eckfrequenz $f_{Trenn}$ wie die des Hochpassfilters 11, von z.B. 0,05 Hz, gefiltert. Zur Bestimmung des Rollwinkels $\lambda_E$ des Motorrades werden das Berechnungsergebnis $\lambda_1$ der zeitlichen Integration 10 der motorradfesten Rollrate $\dot{\lambda}^M$ und das Berechnungsergebnis $\lambda_2{'}$ der Bestimmung einer Rollwinkelgröße aus einer motorradfesten Beschleunigung in z-Richtung $\ddot{z}^M$ addiert (Block 15').

Die verwendeten Filter 11, 14' sind üblicherweise $PT_1$-Glieder erster Ordnung. Die Trennfrequenz $f_{Trenn}$ liegt z.B. im Bereich von etwa 0,01 Hz bis etwa 0,10 Hz.

Die Berechnung der zweiten Rollwinkelgröße $\lambda_2{'}$ aus einer motorradfesten Beschleunigung in z-Richtung $\ddot{z}^M$ gilt nur für stationäre Kurvenfahrt. Außerdem basiert sie, wenn der Faktor c nicht berücksichtigt wird (c=1), auf der Annahme ideal schmaler Reifen. Allerdings ist die motorradfeste Beschleunigung in z-Richtung $\ddot{z}^M$ nicht Vorzeichen behaftet, so dass eine weitere Information, z.B. die motorradfeste Beschleunigung in y-Richtung $\ddot{y}^M$, zur Festlegung des korrekten Vorzeichens des Rollwinkels $\lambda$ herangezogen werden kann.

Zur Begründung des Zusammenhanges von motorradfester Beschleunigung in z-Richtung $\ddot{z}^M$ und Rollwinkel $\lambda$ wird folgendes erläutert:

Für stationäre Kurvenfahrt gilt, dass der physikalisch wirksame Rollwinkel $\lambda_{th}$ durch den Arcuskosinus des Quotienten von Erdbeschleunigung g zu motorradfester Vertikalbeschleunigung $\ddot{z}^M$ gegeben ist:

$$\lambda_{th} = \arccos\left( \frac{g}{\ddot{z}^M} \right) \qquad\qquad (8)$$

Zur Festlegung des korrekten Vorzeichens kann die motorradfeste Querbeschleunigung $\ddot{y}^M$ herangezogen werden:

$$\lambda_{th} = \arccos\left( \left| \frac{g}{\ddot{z}^M} \right| \right) \cdot (-1) \cdot sign(\ddot{y}^M) \qquad\qquad (9)$$

Dabei ist sign(X) die Vorzeichenfunktion, welche den Wert "1" besitzt, wenn X größer als Null ist, welche "0" ist, wenn X gleich Null ist, und welche "-1" ist, wenn X kleiner als Null ist.

Wie oben bereits erwähnt, kann der Gesamtrollwinkel $\lambda_{ges}$ durch den physikalisch wirksamen Rollwinkel $\lambda_{th}$ angenähert werden:

$$\lambda_{ges} \approx \lambda_{th}$$

Beispielsgemäß wird die zweite Rollwinkelgröße $\lambda_2{'}$ gemäß Gleichung (9) bestimmt (Block 16).

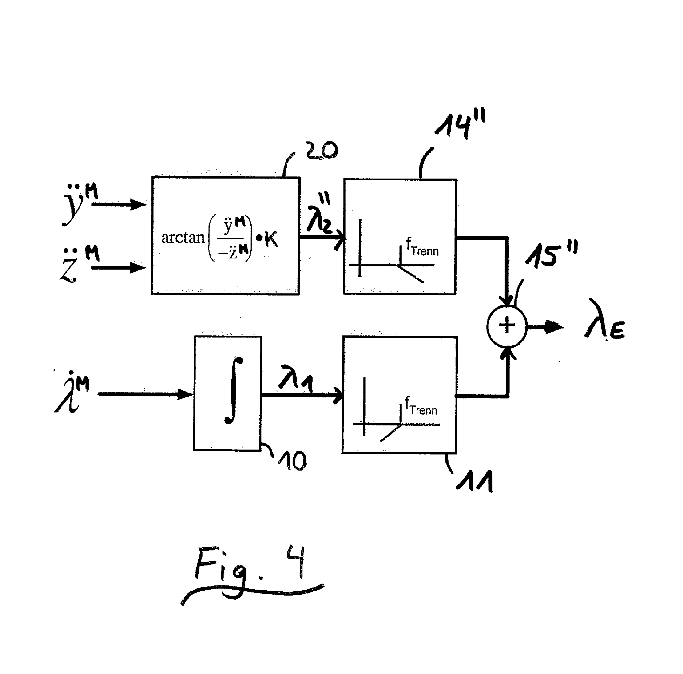

In Fig. 4 ist ein drittes Ausführungsbeispiel eines erfindungsgemäßen Verfahrens schematisch dargestellt. Auch in diesem Ausführungsbeispiel ist die zeitliche Integration 10 der motorradfesten Rollrate $\dot{\lambda}^M$ das erste Berechnungsergebnis (die erste Rollwinkelgröße $\lambda_1$), und auch hier wird beispielsgemäß die erste Rollwinkelgröße $\lambda_1$ mit einem Hochpassfilter 11, mit z.B. einer Eckfrequenz $f_{Trenn}$ von 0,05 Hz, gefiltert. Die im Rahmen des ersten Ausführungsbeispiels weiter oben gegebenen Erläuterung und Alternativen zur Berechnung der ersten Rollwinkelgröße $\lambda_1$ gelten hier entsprechend. Im Unterschied zum ersten Ausführungsbeispiel wird im dritten Ausführungsbeispiel das zweite Berechnungsergebnis (die zweite Rollwinkelgröße $\lambda_2{''}$) aus zwei motorradfesten Beschleunigungen, insbesondere einer motorradfesten Beschleunigung in z-Richtung $\ddot{z}^M$ und einer motorradfesten Beschleunigung in y-Richtung $\ddot{y}^M$, bestimmt

(Block 20). Das zweite Berechnungsergebnis $\lambda_2''$ wird mit einem Tiefpassfilter 14", mit z.B. der gleichen Eckfrequenz $f_{Trenn}$ wie die des Hochpassfilters 11, von z.B. 0,05 Hz, gefiltert. Zur Bestimmung des Rollwinkels $\lambda_E$ des Motorrades werden das Berechnungsergebnis $\lambda_1$ der zeitlichen Integration 10 der motorradfesten Rollrate $\dot{\lambda}^M$ und das Berechnungsergebnis $\lambda_2''$ der Bestimmung einer Rollwinkelgröße aus zwei motorradfesten Beschleunigungen, z.B. einer motorradfesten Vertikalbeschleunigung $\ddot{z}^M$ und einer motorradfesten Querbeschleunigung $\ddot{y}^M$, addiert (Block 15").

Die verwendeten Filter 11, 14" sind üblicherweise PT$_1$-Glieder erster Ordnung. Die Trennfrequenz $f_{Trenn}$ liegt z.B. im Bereich von etwa 0,01 Hz bis etwa 0,10 Hz.

Die Berechnung der zweiten Rollwinkelgröße $\lambda_2''$ aus einer motorradfesten Beschleunigung in z-Richtung $\ddot{z}^M$ und einer motorradfesten Beschleunigung in y-Richtung $\ddot{y}^M$ gilt nur für stationäre Kurvenfahrt. In die Berechnung gehen die Reifengeometrie und das dynamische Reifenverhalten des Motorrades ein.

Zur Begründung des Zusammenhanges von motorradfester Beschleunigung in z-Richtung $\ddot{z}^M$, motorradfester Beschleunigung in y-Richtung $\ddot{y}^M$ und Rollwinkel $\lambda$ wird folgendes erläutert:

Wie oben bereits erwähnt, gilt folgender Zusammenhang:

$$\lambda_{ges} = \lambda_{ZS} + \lambda_{th} \qquad (10)$$

Entsprechend Gleichung (8) gilt für stationäre Kurvenfahrt, dass der physikalisch wirksame Rollwinkel $\lambda_{th}$ durch den Arcuskosinus des Quotienten von Erdbeschleunigung g zu motorradfester Vertikalbeschleunigung $\ddot{z}^M$ gegeben ist:

$$\lambda_{th} = \arccos\left(\frac{g}{\ddot{z}^M}\right) \qquad (11)$$

Außerdem gilt für stationäre Kurvenfahrt, dass der Zusatzrollwinkel $\lambda_{ZS}$ durch den Arcustangens des Quotienten von motorradfester Querbeschleunigung $\ddot{y}^M$ zu motorradfester Vertikalbeschleunigung $\ddot{z}^M$ gegeben ist:

$$\lambda_{ZS} = \arctan\left(\frac{\ddot{y}^M}{-\ddot{z}^M}\right) \qquad (12)$$

Einsetzen von Gleichungen (11) und (12) in (10) liefert:

$$\lambda_{ges} = \arccos\left(\frac{g}{\ddot{z}^M}\right) + \arctan\left(\frac{\ddot{y}^M}{-\ddot{z}^M}\right) \qquad (13)$$

Beispielsgemäß wird der Gesamtrollwinkel $\lambda_{ges}$ als ein Vielfaches $k$ des reifenbreitenbedingten Zusatzrollwinkels $\lambda_{ZS}$ angenähert. Er errechnet sich damit nach folgender Beziehung (Block 20):

$$\lambda_{ges} = k \cdot \arctan\left(\frac{\ddot{y}^M}{-\ddot{z}^M}\right) \qquad (14)$$

Dabei ist der Faktor $k$ abhängig von der Reifengeometrie und dem dynamischen Reifenverhalten des Motorrades. Ein beispielsgemäßer Wert ist $k=9,7$.

Ein Vorteil des erfindungsgemäßen Verfahrens liegt darin, dass der Rollwinkel $\lambda_E$ des Motorrades ohne Zeitverzug, abgesehen von Zeitverzögerungen hervorgerufen durch die Sensoren, vorliegt. Sowohl bei stationären als auch bei instationären Fahrzuständen kann der Rollwinkel $\lambda_E$ bestimmt werden. Außerdem ist die Genauigkeit des durch Kombination zweier Berechnungsmethoden bestimmten Rollwinkels größer, als dies mit einem einzelnen Messverfahren möglich ist.

Die zeitliche Integration der Rollrate für sich alleine ist als Verfahren zur Ermittlung eines Rollwinkels nicht geeignet. Aufgrund des mit der Zeit ansteigenden Messfehlers kann dieses Verfahren mit Standard-Sensorik nicht direkt angewendet werden.

Ein weiterer Vorteil ist, dass die Herstellungskosten eines Gerätes zur Umsetzung des erfindungsgemäßen Verfahrens im Vergleich mit hochgenauer Inertialsensorik bei gleicher Genauigkeit deutlich geringer sind.

Im Vergleich zum ersten Ausführungsbeispiel (Fig. 2) mit einer Rollwinkelbestimmung aus zwei Drehratensignalen (Rollrate $\dot{\lambda}^M$ und Gierrate $\dot{\psi}^M$) sind die Herstellungskosten des Gerätes zur Rollwinkelbestimmung gemäß des zweiten und dritten Ausführungsbeispiels aus Rollrate $\dot{\lambda}^M$ und ein $\ddot{z}^M$ oder zwei $\ddot{z}^M$, $\ddot{y}^M$ Beschleunigungen deutlich gesenkt. Es bietet sich die Verwendung eines Sensorclusters an, welcher z.B. aus der Verwendung in elektronischen Stabilitätsprogrammen (ESP) in Personenkraftwagen bereits bekannt ist. Ein solcher Sensorcluster liefert üblicherweise ein Drehratensignal und ein oder zwei Beschleunigungssignale. Ein solcher Sensorcluster kann gegebenenfalls um 90 Grad gedreht eingebaut werden.

Bei Kombination der Ergebnisse von zeitlicher Integration 10 der motorradfesten Rollrate $\dot{\lambda}^M$ und der Funktion 13 des Produktes 12 von motorradfester Gierrate $\dot{\psi}^M$ und Fahrgeschwindigkeit v des Motorrades (erstes Ausführungsbeispiel) ist es von Vorteil, dass die Position der Sensorik am Motorrad nicht relevant ist, da die Drehraten am gesamten Fahrzeug gleich sind.

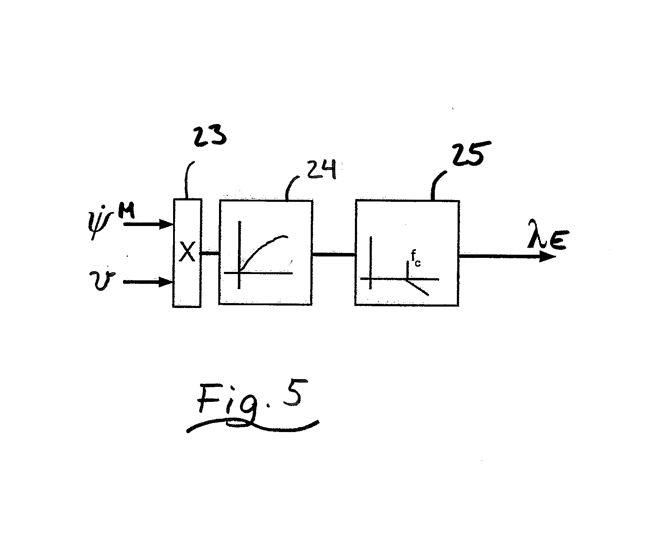

Die Erfindung betrifft außerdem ein Verfahren zur Bestimmung des Rollwinkels eines Motorrades während der Fahrt aus dem Produkt von motorradfester Gierrate und Fahrgeschwindigkeit des Motorrades. In Fig. 5 ist ein entsprechendes Ausführungsbeispiel schematisch dargestellt. Aus einer motorradfesten Gierrate $\dot{\psi}^M$ und der Fahrgeschwindigkeit v des Motorrades wird das Produkt gebildet (Block 23). Aus dem Produkt wird mittels eines funktionalen Zusammenhangs, welcher z.B. in Form einer Kennlinie vorgegeben ist, eine Rollwinkelgröße bestimmt (Block 24). Nach Filterung des Berechnungsergebnisses mit Tiefpassfilter 25 ergibt sich der Rollwinkel $\lambda_E$ des Motorrades.

Filter 25 ist üblicherweise ein $PT_1$-Glied erster Ordnung. Die Eckfrequenz liegt z.B. im Bereich von etwa 1 Hz.

Gemäß eines nicht dargestellten Ausführungsbeispiels wird zur Absenkung der Signalspitzen bei schneller Slalomfahrt eine Kombination mehrerer Filter verwendet: ein Tiefpassfilter (Eckfrequenz etwa 0,05 Hz), ein Hochpassfilter (Eckfrequenz etwa 0,05 Hz, Verstärkungsfaktor 0,5), Addition beider Signale und eventuell weitere Filterung mit einem Tiefpassfilter (Eckfrequenz etwa 1 Hz) zur Signalglättung.

Gemäß der obigen Erläuterungen (Gleichungen (2) bis (7)) ist der Rollwinkel $\lambda$ eine Funktion f des Produktes $\dot{\psi}^M \cdot v$ von motorradfester Gierrate $\dot{\psi}^M$ und Fahrgeschwindigkeit v des Motorrades (siehe Gleichung (7)). Es wird eine numerisch ermittelte Kennlinie verwendet (Block 24), um aus dem Produkt (Block 23) von motorradfester Gierrate $\dot{\psi}^M$ und Fahrgeschwindigkeit v den Rollwinkel $\lambda$ zu bestimmen.

Die Herstellungskosten des Gerätes zur Umsetzung des Verfahrens (Bestimmung des Rollwinkels aus dem Produkt von motorradfester Gierrate und Fahrgeschwindigkeit) sind bei gleicher Genauigkeit im Vergleich mit hochgenauer Inertialsensorik deutlich geringer. Die Position der Sensorik am Motorrad ist nicht relevant, da die Drehrate am gesamten Fahrzeug gleich ist.

Weiter oben werden Verfahren zur Bestimmung eines Rollwinkels basierend auf Beschleunigungsmessung ($\ddot{z}^M$ oder $\ddot{z}^M$, $\ddot{y}^M$) und Messung der Rollrate $\dot{\lambda}^M$ beschrieben. Die Fehlertoleranz dieser Verfahren kann durch Filterung der Rollrate $\dot{\lambda}^M$ mit einem Hochpassfilter erster Ordnung, z.B. mit einer Eckfrequenz von etwa 0,01 Hz, erhöht werden.

Die Erfindung betrifft außerdem ein Verfahren zur Plausibilisierung des Messwertes eines Rollwinkel-Bestimmungs-Algorithmus. Zur Plausibilisierung des Verfahrens kann der Rollwinkel für den stationären Fahrzustand, d.h. die zweite Rollwinkelgröße, auf redundante Weise mit unterschiedlichen Methoden bestimmt werden. Beispielsweise kann aus der motorradfesten Gierrate $\dot{\psi}^M$ und der Fahrgeschwindigkeit v sowie aus der motorradfesten Vertikalbeschleunigung $\ddot{z}^M$ und der motorradfesten Querbeschleunigung $\ddot{y}^M$ je eine Rollwinkelgröße $\lambda_2$ bzw. $\lambda_2''$ bestimmt werden. Jede Wahl von zwei oder mehr Rollwinkel-Bestimmungsmethoden ist denkbar. Durch Vergleich der Ergebnisse ist eine Einschätzung der Vertrauenswürdigkeit des mittels der Rollwinkelgröße(n) bestimmten Rollwinkels $\lambda_E$ möglich.

Außerdem kann durch die Plausibilisierung / den Vergleich unter Umständen ein Sensorfehler erkannt werden. Besteht eine erhebliche Differenz zwischen den auf mehrfache Art bestimmten Rollwinkelgrößen $\lambda_2$, $\lambda_2'$, $\lambda_2''$, so kann auf eine Fehlfunktion eines der Beschleunigungssensoren oder Drehratensensoren geschlossen werden.

Messen die vorhandenen Beschleunigungssensoren konstante Werte über einen bestimmten Zeitraum, so muss die Rollrate $\dot{\lambda}^M$ in diesem Zeitraum Null sein. Damit kann ein Offset des Rollratensensors bestimmt und ausgeglichen werden.

Zwischen zwei beliebigen Fahrzuständen mit einem Rollwinkel von Null Grad beträgt das Integral der Rollrate $\dot{\lambda}^M$ Null Grad. Bei bekanntem Offset des Rollratensensors kann mit dieser Bedingung der Linearitätsfehler des Rollratensensors bestimmt werden.

Sicherheitskritische Systeme benötigen eine Information über die Verlässlichkeit des Rollwinkelsignals. Diese Verlässlichkeit kann anhand des beschriebenen Verfahrens zur Plausibilisierung bestimmt werden.

Ein fahrendes Motorrad muss sich immer in einer Gleichgewichtsposition befinden. Dies ist sowohl für die Geradeaus als auch für die Kurvenfahrt notwendig. Die Gleichgewichtsposition des Motorrades ist von vielen verschiedenen Faktoren abhängig, z.B. der Fahrzeuggeschwindigkeit v, dem Reibwert zwischen Reifen und Fahrbahn, den Raddrehzahlen $\omega_i$ (i = 1 oder 2 für Vorderrad oder Hinterrad), der Motordrehzahl, dem Lenkwinkel, der Fahrzeugsbeladung, der Fahrbahnneigung etc. Diese Faktoren beeinflussen die Gleichgewichtswerte für die Rollrate $\dot{\lambda}^M$, die Gierrate $\dot{\psi}^M$ und die drei Komponenten der Fahrzeugbeschleunigung $\ddot{x}^M$, $\ddot{y}^M$ und $\ddot{z}^M$.

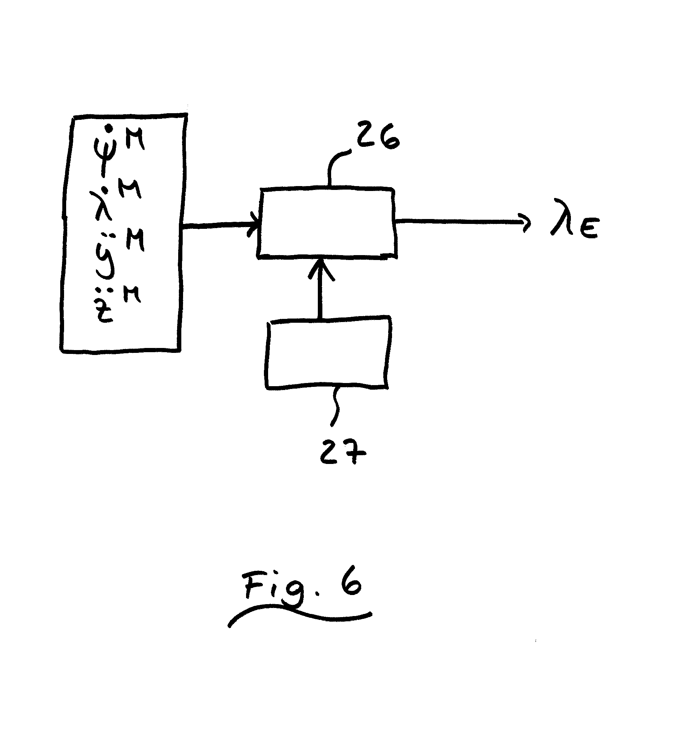

In Fig. 6 ist ein viertes Ausführungsbeispiel eines erfindungsgemäßen Verfahrens schematisch dargestellt. Der beispielsgemäße Algorithmus für die Berechnung 26 des Rollwinkels $\lambda_E$ basiert auf den Messungen der Werte für die Gierrate $\dot{\psi}^M$, die Rollrate $\dot{\lambda}^M$, die motorradfeste Beschleunigung in z-Richtung $\ddot{z}^M$ und die motorradfeste Beschleunigung in y-Richtung $\ddot{y}^M$ mit entsprechenden Sensoren. Um eine hohe Genauigkeit zu gewährleisten, muss sich der Algorithmus in Abhängigkeit von der Fahrsituation adaptiv ändern. Um dies zu ermöglichen, ist es erforderlich, die Informationen von mehreren Fahrzeugsystemen (Fahrzeugsensoren) mitzubenutzen, die aktuelle Fahrsituation einzuschätzen und den Algorithmus zur Berechnung 26 des Rollwinkels $\lambda_E$ entsprechend der Fahrsituation zu adaptieren. Hierzu wird in Block 27 die aktuelle Fahrsituation anhand einer oder mehrerer der folgenden Größen eingeschätzt: Motordrehzahl, Motormoment, Lenkwinkel, Fahrzeuggeschwindigkeit v, Fahrzeugbeschleunigung, Raddrehzahlen $\omega_i$, Fahrbahnzustand, Radschlupf, Fahrzeugbeladung, Fahrbahnneigung. Diese Einschätzung fließt dann in die Berechnung 26 des Rollwinkels $\lambda_E$ ein.

Es muss auch berücksichtigt werden, dass sich der theoretische Rollwinkel $\lambda_{th}$ und der Gesamtrollwinkel $\lambda_{ges}$ unterscheiden, da die Reifenbreite ungleich Null ist.

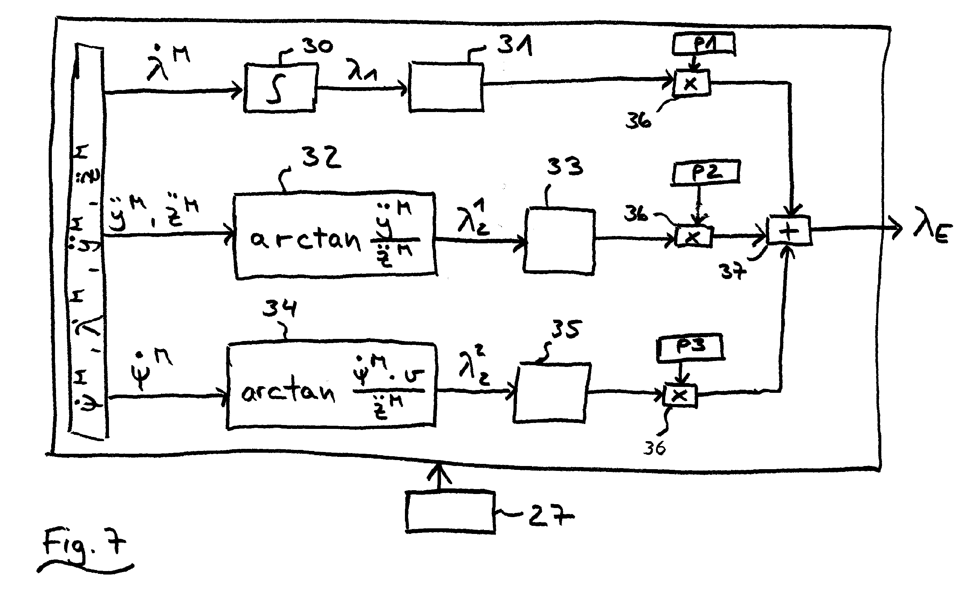

In Fig. 7 ist ein beispielsgemäßes Verfahren zur adaptiven Berechnung eines Rollwinkels $\lambda_E$ schematisch dargestellt. Um eine hohe Genauigkeit zu gewährleisten, wird eine Kombination von verschiedenen Methoden zur Berechnung des Rollwinkels $\lambda_E$ benutzt. Gleichzeitig werden Messungen der Rollrate $\dot{\lambda}^M$, der Gierrate $\dot{\psi}^M$ und der Beschleunigungen in z- und y-Richtung $\ddot{z}^M$, $\ddot{y}^M$ durchgeführt, z.B. mit einem Sensorcluster. Es wird das Integral 30 der Rollrate $\dot{\lambda}^M$ gebildet und das Ergebnis $\lambda_1$ wird mit einem Hochpassfilter 31 gefiltert. Des Weiteren wird in Block 32 der Arcustangens des Quotienten von Beschleunigung in y-Richtung $\ddot{y}^M$ zu Beschleunigung in z-Richtung $\ddot{z}^M$ berechnet und das Ergebnis $\lambda_2^1$ mit einem Tiefpassfilter 33 gefiltert. Ebenso wird in Block 34 der Arcustangens des Quotienten von Produkt aus Gierrate $\dot{\psi}^M$ mal Fahrzeugbeschleunigung v zu Beschleunigung in z-Richtung $\ddot{z}^M$ berechnet und das Ergebnis $\lambda_2^2$ mit einem Tiefpassfilter 35 gefiltert. Die drei Ergebnisse werden mit entsprechenden Gewichtsparametern P1, P2 und P3 multipliziert (Blöcke 36) und aufsummiert (Block 37).

Eigenschaften des Systems (z.B. Filtereigenschaften), wie z.B. die Trennfrequenzen der einzelnen Filter 31, 33, 35 und/oder die Gewichtungsparameter P1, P2, P3 werden in Abhängigkeit von der aktuellen Fahrsituation 27 geändert, welche durch mindestens eine der oben genannten Größen erkannt wird, z.B. Fahrzeuggeschwindigkeit v, Radschlupf, Raddrehzahlen $\omega_i$, Motordrehzahlen, Lenkwinkel, Fahrzeugbeladung, Fahrbahnneigung, Rollrate $\dot{\lambda}^M$, Gierrate $\dot{\psi}^M$, Rollwinkelbeschleunigung, Gierwinkelbeschleunigung, Rollwinkel $\lambda_E$ (z.B. zuvor berechnet). Die Abhängigkeiten der Systemeigenschaften, z.B. der Trennfrequenzen der Filter und der Gewichtsparameter P1, P2, P3, von diesen Größen werden empirisch oder theoretisch ermittelt, in einem Steuergerät in Form von Kennlinien oder -feldern oder Berechnungsvorschriften abgelegt und bei der Berechnung des Rollwinkels berücksichtigt. Durch eine automatische (anhand der abgelegten Kennlinien, -felder oder Berechnungsalgorithmen) Änderung der Parameter lässt sich das System für jede Fahrsituation adaptieren und der Rollwinkel $\lambda_E$ des Fahrzeugs genau bestimmen.

**Patentansprüche**

1. Verfahren, welches zur Bestimmung eines Rollwinkels eines Kraftrades verwendet wird, wobei mindestens eine Fahrzeuggeschwindigkeit (v) und eine Gierrate ($\dot{\psi}^M$) des Fahrzeuges ermittelt werden, **dadurch gekennzeichnet, dass**

    - eine Rollrate ($\dot{\lambda}^M$) des Fahrzeugs, insbesondere mittels eines Drehratensensors, ermittelt wird,
    - aus der Rollrate ($\dot{\lambda}^M$) eine erste Rollwinkelgröße ($\lambda_1$) bestimmt wird, wobei die Rollrate ($\dot{\lambda}^M$) mit einem Hochpassfilter, insbesondere mit einer Eckfrequenz von etwa 0,01 Hz, gefiltert wird, bevor sie zur Berechnung der ersten Rollwinkelgröße ($\lambda_1$) herangezogen wird,
    - aus dem Produkt (12) der Gierrate ($\dot{\psi}^M$), welche insbesondere durch einen Drehratensensor bestimmt wird, und der Fahrzeuggeschwindigkeit (v) ohne Verwendung einer gemessenen Querbeschleunigung eine zweite Rollwinkelgröße ($\lambda_2$) bestimmt wird, und
    - aus den Rollwinkelgrößen ($\lambda_1$, $\lambda_2$), insbesondere durch Addition (15), der Rollwinkel ($\lambda_E$) berechnet wird.

2. Verfahren nach Anspruch 1, **dadurch gekennzeichnet, dass** die erste Rollwinkelgröße ($\lambda_1$) durch zeitliche Integration (10) aus der Rollrate ($\dot{\lambda}^M$) berechnet wird.

3. Verfahren nach Anspruch 1 oder 2, **dadurch gekennzeichnet, dass** die erste Rollwinkelgröße ($\lambda_1$) mit einem Hochpassfilter (11) gefiltert wird, bevor sie zur Berechnung des Rollwinkels ($\lambda_E$) herangezogen wird.

**4.** Verfahren nach mindestens einem der Ansprüche 1 bis 3, **dadurch gekennzeichnet, dass** die zweite Rollwinkelgröße ($\lambda_2$) mit einem Tiefpassfilter (14) gefiltert wird, bevor sie zur Berechnung des Rollwinkels ($\lambda_E$) herangezogen wird.

**5.** Verfahren nach Anspruch 4, **dadurch gekennzeichnet, dass** die Eckfrequenz ($f_{Trenn}$) des zur Filterung der zweiten Rollwinkelgröße ($\lambda_2$) verwendeten Tiefpassfilters (14) gleich oder etwa gleich ist zu der Eckfrequenz des zur Filterung der ersten Rollwinkelgröße ($\lambda_1$) verwendeten Hochpassfilters (10).

**6.** Verfahren nach mindestens einem der Ansprüche 1 bis 5, **dadurch gekennzeichnet, dass** die zweite Rollwinkelgröße aus der Gierrate ($\dot{\psi}^M$), der Fahrzeuggeschwindigkeit (v) und einer Vertikalbeschleunigung ($\ddot{z}^M$) des Fahrzeugs ermittelt wird.

**7.** Verfahren nach mindestens einem der Ansprüche 1 bis 6, **dadurch gekennzeichnet, dass** die zweite Rollwinkelgröße ($\lambda_2$)

- anhand einer in einem Steuergerät abgelegten Kennlinie (13) oder eines in einem Steuergerät abgelegten Kennfeldes, oder
- anhand eines Berechnungsalgorithmus aus der/den jeweiligen fahrdynamischen Kenngröße(n) bestimmt wird.

**8.** Verfahren nach mindestens einem der Ansprüche 1 bis 7, **dadurch gekennzeichnet, dass** mindestens eine weitere zweite Rollwinkelgröße ($\lambda_2''$)

- aus einer Vertikalbeschleunigung ($\ddot{z}^M$) des Fahrzeugs, oder
- aus einer Vertikal- und einer Querbeschleunigung ($\ddot{z}^M$, $\ddot{y}^M$) des Fahrzeugs

bestimmt wird, und diese zweiten Rollwinkelgrößen ($\lambda_2$, $\lambda_2''$) für eine Plausibilitätsprüfung des Rollwinkels ($\lambda_E$) verwendet werden, insbesondere dass zur Plausibilitätsprüfung ein Vergleich der auf unterschiedliche Art bestimmten zweiten Rollwinkelgrößen ($\lambda_2$, $\lambda_2''$) durchgeführt wird.

**9.** Verfahren nach Anspruch 8, **dadurch gekennzeichnet, dass** ein Vergleich der auf unterschiedliche Art bestimmten zweiten Rollwinkelgrößen ($\lambda_2$, $\lambda_2''$) durchgeführt wird, und anhand des Vergleichs eine Fehlfunktion eines Beschleunigungssensors oder Drehratensensors erkannt wird.

**10.** Verfahren nach mindestens einem der Ansprüche 1 bis 9, **dadurch gekennzeichnet, dass** ermittelte Beschleunigungswerte zur Bestimmung eines Offsets des Drehratensensors zur Bestimmung der Rollrate ($\dot{\lambda}^M$) verwendet werden.

**11.** Verfahren nach Anspruch 10, **dadurch gekennzeichnet, dass** mit Hilfe des bestimmten Offsets ein Linearitätsfehler der Rollrate bestimmt wird.

**12.** Verfahren nach mindestens einem der Ansprüche 1 bis 11, **dadurch gekennzeichnet, dass** der Rollwinkel ($\lambda_E$) durch gewichtete Summation (37) aus den mindestens zwei, insbesondere mit einem Hoch- (31) oder Tiefpassfilter (33, 35) gefilterten, Rollwinkelgrößen ($\lambda_1$, $\lambda_2^1$, $\lambda_2^2$) berechnet wird, wobei jeweils Gewichtsparameter (P1, P2, P3) zur Gewichtung der einzelnen Rollwinkelgrößen ($\lambda_1$, $\lambda_2^1$, $\lambda_2^2$) vorhanden sind, welche ihrerseits in Abhängigkeit von der aktuellen Fahrsituation (27) angepasst werden, welche anhand von mindestens einer der folgenden Größen erkannt wird: Motordrehzahl, Motormoment, Lenkwinkel, Fahrzeuggeschwindigkeit (v), Fahrzeugbeschleunigung, Raddrehzahl ($\omega_i$), Fahrbahnzustand, Rollrate ($\dot{\lambda}^M$), Gierrate ($\dot{\psi}^M$), Rollwinkelbeschleunigung, Gierwinkelbeschleunigung, Rollwinkel ($\lambda_E$), Radschlupf, Fahrzeugbeladung, Fahrbahnneigung.

**13.** Verfahren nach Anspruch 12, **dadurch gekennzeichnet, dass** die Eigenschaften, insbesondere die Trennfrequenzen, der zur Filterung der Rollwinkelgrößen ($\lambda_1$, $\lambda_2^1$, $\lambda_2^2$) verwendeten Filter (31, 33, 35) in Abhängigkeit von der aktuellen Fahrsituation (27) gewählt werden.

**14.** Vorrichtung zur Bestimmung des Rollwinkels eines Kraftrades, welche mindestens eine Auswerteeinheit, mindestens ein Mittel zur Ermittlung einer Fahrzeuggeschwindigkeit (v) und ein Mittel zur Ermittlung einer Gierrate ($\dot{\psi}^M$) des Fahrzeugs umfasst, **dadurch gekennzeichnet, dass** die Vorrichtung ein Mittel zur Ermittlung einer Rollrate ($\dot{\lambda}^M$) des Fahrzeugs umfasst und dass die mindestens eine Auswerteeinheit eine addierende Schaltung (15) umfasst, mit welcher mindestens zwei Rollwinkelgrößen ($\lambda_1$, $\lambda_2$) zu einem Rollwinkel ($\lambda_E$) aufaddiert werden, wobei eine erste

Rollwinkelgröße ($\lambda_1$) aus der Rollrate ($\dot{\lambda}^M$) des Fahrzeugs bestimmt wird, wobei die Rollrate ($\dot{\lambda}^M$) mit einem Hochpassfilter, insbesondere mit einer Eckfrequenz von etwa 0,01 Hz, gefiltert wird, bevor sie zur Berechnung der ersten Rollwinkelgröße ($\lambda_1$) herangezogen wird, und eine zweite Rollwinkelgröße ($\lambda_2$) aus dem Produkt der Gierrate ($\dot{\psi}^M$) und der Fahrzeuggeschwindigkeit (v), ohne Verwendung einer gemessenen Querbeschleunigung, bestimmt wird.

15. Vorrichtung nach Anspruch 14, **dadurch gekennzeichnet, dass** mindestens eine Auswerteeinheit einen Hochpassfilter umfasst, mit welchem die Rollrate ($\dot{\lambda}^M$) gefiltert wird.

16. Vorrichtung nach Anspruch 14 oder 15, **dadurch gekennzeichnet, dass** mindestens eine Auswerteeinheit eine integrierende Schaltung umfasst, mit welcher aus der, insbesondere gefilterten, Rollrate ($\dot{\lambda}^M$) durch Integration (10) die erste Rollwinkelgröße ($\lambda_1$) bestimmt wird.

17. Vorrichtung nach mindestens einem der Ansprüche 14 bis 16, **dadurch gekennzeichnet, dass** mindestens eine Auswerteeinheit einen Hochpassfilter (11) umfasst, mit welchem die erste Rollwinkelgröße ($\lambda_1$) gefiltert wird, bevor sie zur Berechnung des Rollwinkels ($\lambda_E$) herangezogen wird.

18. Vorrichtung nach mindestens einem der Ansprüche 14 bis 17, **dadurch gekennzeichnet, dass** mindestens eine Auswerteeinheit einen Tiefpassfilter (14) umfasst, mit welchem die zweite Rollwinkelgröße ($\lambda_2$) gefiltert wird, bevor sie zur Berechnung des Rollwinkels ($\lambda_E$) herangezogen wird.

19. Vorrichtung nach Ansprüche 18, **dadurch gekennzeichnet, dass** der Tiefpassfilter (14) zur Filterung der zweiten Rollwinkelgröße ($\lambda_2$) die gleiche oder etwa gleiche Eckfrequenz ($f_{Trenn}$) besitzt wie der Hochpassfilter (11) zur Filterung der ersten Rollwinkelgröße ($\lambda_1$).

20. Vorrichtung nach mindestens einem der Ansprüche 14 bis 19, **dadurch gekennzeichnet, dass** mindestens eine Auswerteeinheit eine Schaltung umfasst, mit welcher

- aus der Gierrate ($\dot{\psi}^M$) und der Fahrzeuggeschwindigkeit (v), insbesondere anhand einer Kennlinie (13) oder eines Kennfeldes, oder
- aus der Gierrate ($\dot{\psi}^M$), der Fahrzeuggeschwindigkeit (v) und einer Vertikalbeschleunigung ($\ddot{z}^M$) des Fahrzeugs,

die zweite Rollwinkelgröße ($\lambda_2$) bestimmt wird.

21. Verwendung des Verfahrens gemäß mindestens einem der Ansprüche 1 bis 13 in einem der folgenden Systeme eines Kraftrades: elektronisch gesteuertes Bremssystem, Kurvenlichtsystem, Fahrwerksystem, elektrisches Lenksystem und Fahrdynamikregelsystem.

## Claims

1. Method which is used to determine a roll angle of a motorcycle, wherein at least one vehicle velocity (v) and one yaw rate ($\dot{\psi}^M$) of the vehicle are acquired, **characterized in that**

- a rolling rate ($\dot{\lambda}^M$) of the vehicle is acquired, in particular by means of a rotational speed sensor,
- a first roll angle variable ($\lambda_1$) is determined from the rolling rate ($\dot{\lambda}^M$), wherein the rolling rate ($\dot{\lambda}^M$) is filtered with a high pass filter, in particular with a cut-off frequency of approximately 0.01 Hz before it is used to calculate the first roll angle variable ($\lambda_1$),
- a second roll angle variable ($\lambda_2$) is determined (from the product (12) of the yaw rate ($\dot{\psi}^M$), which is determined in particular by means of a rotational speed sensor, and the vehicle velocity (v) without the use of a measured lateral acceleration,
- the roll angle ($\lambda_E$) is calculated from the roll angle variables ($\lambda_1$, $\lambda_2$), in particular by addition (15).

2. Method according to Claim 1, **characterized in that** the first roll angle variable ($\lambda_1$) is calculated from the rolling rate ($\dot{\lambda}^M$) by integration (10) over time.

3. Method according to Claim 1 or 2, **characterized in that** the first roll angle variable ($\lambda_1$) is filtered with a high pass filter (11) before it is used to calculate the roll angle ($\lambda_E$).

4. Method according to at least one of Claims 1 to 3, **characterized in that** the second roll angle variable ($\lambda_2$) is filtered with a low pass filter (14) before it is used to calculate the roll angle ($\lambda_E$).

5. Method according to Claim 4, **characterized in that** the cut-off frequency ($f_{Trenn}$) of the low pass filter (14) which is used to filter the second roll angle variable ($\lambda_2$) is identical or approximately identical to the cut-off frequency of the high pass filter (10) which is used to filter the first roll angle variable ($\lambda_1$).

6. Method according to one of Claims 1 to 5, **characterized in that** the second roll angle is acquired from the yaw rate ($\dot{\psi}^M$), the vehicle velocity (v) and a vertical acceleration ($\ddot{z}^M$) of the vehicle.

7. Method according to at least one of Claims 1 to 6, **characterized in that** the second roll angle variable ($\lambda_2$) is determined from the respective vehicle movement dynamics characteristic variable or variables

   - on the basis of a characteristic curve (13) which is stored in a control unit or a characteristic diagram which is stored in a control unit, or
   - on the basis of a calculation algorithm.

8. Method according to at least one of Claims 1 to 7, **characterized in that** at least a further second roll angle variable ($\lambda_2$") is determined

   - from a vertical acceleration ($\ddot{z}^M$) of the vehicle, or
   - from a vertical acceleration and a lateral acceleration ($\ddot{z}^M$, $\ddot{y}^M$) of the vehicle, and these second roll angle variables ($\lambda_2$, $\lambda_2$") are used for plausibility checking of the roll angle ($\lambda_E$), in particular **in that** a comparison of the second roll angle variables ($\lambda_2$, $\lambda_2$") which are determined in different ways is carried out for the purpose of plausibility checking.

9. Method according to Claim 8, **characterized in that** a comparison of the second roll angle variables ($\lambda_2$, $\lambda_2$") which are determined in different ways is carried out, and a malfunction of an acceleration sensor or rotational speed sensor is detected on the basis of the comparison.

10. Method according to at least one of Claims 1 to 9, **characterized in that** acquired acceleration values are used to determine an offset of the rotational speed sensor in order to determine the rolling rate ($\dot{\lambda}^M$).

11. Method according to Claim 10, **characterized in that** a linearity fault of the rolling rate is determined using the offset which is determined.

12. Method according to at least one of Claims 1 to 11, **characterized in that** the roll angle ($\lambda_E$) is calculated by weighted summing (37) from the at least two roll angle variables ($\lambda_1$, $\lambda_2{}^1$, $\lambda_2{}^2$), which are in particular filtered with a high pass filter (31) or low pass filter (33, 35), wherein in each case weighting parameters (P1, P2, P3) are provided for weighting the individual roll angle variables ($\lambda_1$, $\lambda_2{}^1$, $\lambda_2{}^2$) which are themselves adapted as a function of the current travel situation (27), which is detected on the basis of at least one of the following variables: engine speed, engine torque, steering angle, vehicle velocity (v), vehicle acceleration, wheel speed ($\omega_i$), state of the roadway, rolling rate ($\dot{\lambda}^M$), yaw rate ($\dot{\psi}^M$), roll angle acceleration, yaw angle acceleration, roll angle ($\lambda_E$), wheel slip, vehicle load, inclination of the roadway.

13. Method according to Claim 12, **characterized in that** the properties, in particular the cut-off frequencies, of the filters (31, 33, 35) which are used to filter the roll angle variables ($\lambda_1$, $\lambda_2{}^1$, $\lambda_2{}^2$) are selected as a function of the current travel situation (27).

14. Device for determining the roll angle of a motorcycle, which device has at least one evaluation unit, at least one means for acquiring a vehicle velocity (v) and a means for acquiring a yaw rate ($\dot{\psi}^M$) of the vehicle, **characterized in that** the device has a means for acquiring a rolling rate ($\dot{\lambda}^M$) of the vehicle and **in that** the at least one evaluation unit comprises an adding circuit (15) with which at least two roll angle variables ($\lambda_1$, $\lambda_2$) are added to form a roll angle ($\lambda_E$), wherein a first roll angle variable ($\lambda_1$) is determined from the rolling rate ($\dot{\lambda}^M$) of the vehicle, wherein the rolling rate ($\dot{\lambda}^M$) is filtered with a high pass filter, in particular with a cut-off frequency of approximately 0.01 Hz before it is used to calculate the first roll angle variable ($\lambda_1$), and a second roll angle variable ($\lambda_2$) is determined from the product of the yaw rate ($\dot{\psi}^M$) and the vehicle velocity (v) without the use of a measured lateral acceleration.

**15.** Device according to Claim 14, **characterized in that** at least one evaluation unit comprises a high pass filter with which the rolling rate ($\dot{\lambda}^M$) is filtered.

**16.** Device according to Claim 14 or 15, **characterized in that** at least one evaluation unit comprises an integrating circuit with which the first roll angle variable ($\lambda_1$) is determined from the, in particular filtered, rolling rate ($\dot{\lambda}^M$) by integration (10).

**17.** Device according to at least one of Claims 14 to 16, **characterized in that** at least one evaluation unit comprises a high pass filter (11) with which the first roll angle variable ($\lambda_1$) is filtered before it is used to calculate the roll angle ($\lambda_E$).

**18.** Device according to at least one of Claims 14 to 17, **characterized in that** at least one evaluation unit comprises a low pass filter (14) with which the second roll angle variable ($\lambda_2$) is filtered before it is used to calculate the roll angle ($\lambda_E$).

**19.** Device according to Claim 18, **characterized in that** the low pass filter (14) for filtering the second roll angle variable ($\lambda_2$) has the same or approximately the same cut-off frequency ($f_{Trenn}$) as the high pass filter (11) for filtering the first roll angle variable ($\lambda_1$).

**20.** Device according to at least one of Claims 14 to 19, **characterized in that** at least one evaluation unit comprises a circuit with which the second roll angle variable ($\lambda_2$) is determined

- from the yaw rate ($\dot{\psi}^M$) and the vehicle velocity (v), in particular on the basis of a characteristic curve (13) or a characteristic diagram, or
- from the yaw rate ($\dot{\psi}^M$), the vehicle velocity (v) and a vertical acceleration ($\ddot{z}^M$) of the vehicle,

**21.** Use of the method according to at least one of Claims 1 to 13 in one of the following systems of a motorcycle: electronically controlled brake system, turning light system, chassis system, electrical steering system and vehicle movement dynamics control system.

## Revendications

**1.** Procédé utilisé pour déterminer l'angle de roulis d'une moto, dans lequel au moins une vitesse (v) du véhicule et un taux de lacet ($\psi^M$) du véhicule sont déterminés,

**caractérisé en ce que**
un taux de roulis ($\dot{\lambda}^M$) du véhicule est déterminé en particulier au moyen d'un capteur de taux de rotation,
à partir du taux de roulis ($\dot{\lambda}^M$), une première grandeur d'angle de roulis ($\lambda_1$) est déterminée, le taux de roulis ($\dot{\lambda}^M$) étant filtré à l'aide d'un filtre passe-haut, en particulier dont la fréquence de coupure est d'environ 0,01 Hz, avant d'intervenir dans le calcul de la première grandeur ($\lambda_1$) d'angle de roulis,
à partir du produit (12) du taux de lacet ($\psi^M$) déterminé en particulier par un capteur de taux de rotation et de la vitesse (v) du véhicule, une deuxième grandeur ($\lambda_2$) d'angle de roulis est déterminée sans recourir à une accélération transversale mesurée et
l'angle de roulis ($\lambda_E$) est calculé à partir des grandeurs ($\lambda_1$, $\lambda_2$) d'angle de roulis, en particulier par addition (15).

**2.** Procédé selon la revendication 1, **caractérisé en ce que** la première grandeur ($\lambda_1$) d'angle de roulis est calculée par intégration (10) temporelle du taux de roulis ($\dot{\lambda}^M$).

**3.** Procédé selon les revendications 1 ou 2, **caractérisé en ce que** la première grandeur ($\lambda_1$) d'angle de roulis est filtrée à l'aide d'un filtre passe-haut (11) avant d'intervenir dans le calcul de l'angle de roulis ($\lambda_E$).

**4.** Procédé selon au moins l'une des revendications 1 à 3, **caractérisé en ce que** la deuxième grandeur ($\lambda_2$) d'angle de roulis est filtrée à l'aide d'un filtre passe-bas (14) avant d'intervenir dans le calcul de l'angle de roulis ($\lambda_E$).

**5.** Procédé selon la revendication 4, **caractérisé en ce que** la fréquence de coupure ($f_{Trenn}$) du filtre passe-bas (14) utilisé pour filtrer la deuxième grandeur ($\lambda_2$) d'angle de roulis est identique ou sensiblement identique à la fréquence de coupure du filtre passe-haut (10) utilisé pour filtrer la première grandeur ($\lambda_1$) d'angle de roulis.

**6.** Procédé selon au moins l'une des revendications 1 à 5, **caractérisé en ce que** la deuxième grandeur d'angle de roulis est déterminée à partir du taux de lacet ($\psi^M$), de la vitesse (v) du véhicule et de l'accélération verticale ($z^{..M}$) du véhicule.

7. Procédé selon au moins l'une des revendications 1 à 6, **caractérisé en ce que** la deuxième grandeur ($\lambda_2$) d'angle de roulis est déterminée à partir de la ou des grandeurs caractéristiques de la dynamique de roulage, à l'aide d'une ligne caractéristique (13) conservée dans un appareil de commande, d'un champ de caractéristiques conservé dans un appareil de commande ou d'un algorithme de calcul.

8. Procédé selon au moins l'une des revendications 1 à 7, **caractérisé en ce que** au moins une autre deuxième grandeur ($\lambda_2$") d'angle de roulis est déterminée à partir de l'accélération verticale ($z^{..M}$) du véhicule ou à partir d'une accélération verticale et d'une accélération transversale ($z^{..M}$, $y^{..M}$) du véhicule, ces deuxièmes grandeurs ($\lambda_2$, $\lambda_2$") d'angle de roulis étant utilisées pour une vérification de la plausibilité de l'angle de roulis ($\lambda_E$), et en particulier **en ce que** pour la vérification de la plausibilité, on effectue une comparaison des deuxièmes grandeurs ($\lambda_2$, $\lambda_2$") d'angle de roulis déterminées de manières différentes.

9. Procédé selon la revendication 8, **caractérisé en ce qu'**on effectue une comparaison des deuxièmes grandeurs ($\lambda_2$, $\lambda_2$") déterminées de manières différentes et **en ce que** le fonctionnement défectueux d'un capteur d'accélération ou d'un capteur de taux de rotation est détecté à l'aide de la comparaison.

10. Procédé selon au moins l'une des revendications 1 à 9, **caractérisé en ce que** les valeurs déterminées de l'accélération sont utilisées pour déterminer un décalage du capteur de taux de rotation qui détermine le taux de roulis ($\lambda^{.M}$).

11. Procédé selon la revendication 10, **caractérisé en ce qu'**à l'aide du décalage déterminé, on détermine une erreur de linéarité du taux de roulis.

12. Procédé selon au moins l'une des revendications 1 à 11, **caractérisé en ce que** l'angle de roulis ($\lambda_E$) est calculé par sommation pondérée (37) des deux ou plusieurs grandeurs ($\lambda_1$, $\lambda_2^1$, $\lambda_2^2$) d'angle de roulis, en particulier filtrées à l'aide d'un filtre passe-haut (31) ou d'un filtre passe-bas (33, 35), des paramètres de pondération (P1, P2, P3) pondérant les différentes grandeurs ($\lambda_1$, $\lambda_2^1$, $\lambda_2^2$) d'angle de roulis étant prévues et étant elles-mêmes adaptées en fonction de la situation de roulage (27) en cours, détectée à l'aide d'au moins l'une des grandeurs suivantes : vitesse de rotation du moteur, couple du moteur, angle de braquage, vitesse (v) du véhicule, accélération du véhicule, vitesse de rotation des roues ($\omega_i$), état de la chaussée, taux de roulis ($\lambda^{.M}$), taux de lacet ($\psi^M$), accélération de l'angle de roulis, accélération de l'angle de lacet, angle de roulis ($\lambda_E$), patinage des roues, charge du véhicule et pente de la chaussée.

13. Procédé selon la revendication 12, **caractérisé en ce que** les propriétés et en particulier les fréquences de coupure des filtres (31, 33, 35) utilisés pour filtrer les grandeurs ($\lambda_1$, $\lambda_2^1$, $\lambda_2^2$) d'angle de roulis sont sélectionnées en fonction de la situation de roulage (27) en cours.

14. Dispositif en vue de la détermination de l'angle de roulis d'une moto, comprenant au moins une unité d'évaluation, au moins un moyen de détermination de la vitesse (v) du véhicule et un moyen de détermination du taux de lacet ($\psi^M$) du véhicule,
**caractérisé en ce que**
le dispositif comporte un moyen de détermination du taux de roulis ($\lambda^{.M}$) du véhicule et
**en ce que** la ou les unités d'évaluation comprennent un circuit additif (15) par lequel au moins deux grandeurs ($\lambda_1$, $\lambda_2$) d'angle de roulis sont additionnées pour former un angle de roulis ($\lambda_E$),
une première grandeur ($\lambda_1$) d'angle de roulis étant déterminée à partir du taux de roulis ($\lambda^{.M}$) du véhicule,
le taux de roulis ($\lambda^{.M}$) étant filtré à l'aide d'un filtre passe-haut et en particulier dont la fréquence de coupure est d'environ 0,01 Hz avant d'intervenir dans le calcul de la première grandeur ($\lambda_1$) d'angle de roulis, et
une deuxième grandeur ($\lambda_2$) d'angle de roulis étant déterminée à partir du produit du taux de lacet ($\psi^M$) et de la vitesse (v) du véhicule sans recourir à une accélération transversale mesurée.

15. Dispositif selon la revendication 14, **caractérisé en ce qu'**au moins une unité d'évaluation comporte un filtre passe-haut par lequel le taux de roulis ($\lambda^{.M}$) est filtré.

16. Dispositif selon les revendications 14 ou 15, **caractérisé en ce qu'**au moins une unité d'évaluation comporte un circuit intégrateur par lequel la première grandeur ($\lambda_1$) d'angle de roulis est déterminée par intégration (10) du taux de roulis ($\dot{\lambda}^M$) en particulier filtré.

**17.** Dispositif selon au moins l'une des revendications 14 à 16, **caractérisé en ce qu'**au moins une unité d'évaluation comporte un filtre passe-haut (11) par lequel la première grandeur ($\lambda_1$) d'angle de roulis est filtrée avant d'intervenir dans le calcul de l'angle de roulis ($\lambda_E$).

**18.** Dispositif selon au moins l'une des revendications 14 à 17, **caractérisé en ce qu'**au moins une unité d'évaluation comporte un filtre passe-bas (14) par lequel la deuxième grandeur ($\lambda_2$) d'angle de roulis est filtrée avant d'intervenir dans le calcul de l'angle de roulis ($\lambda_E$).

**19.** Dispositif selon la revendication 18, **caractérisé en ce que** le filtre passe-bas (14) qui est utilisé pour filtrer la deuxième grandeur ($\lambda_2$) d'angle de roulis possède une fréquence de coupure ($f_{Trenn}$) égale ou sensiblement égale à celle du filtre passe-haut (11) utilisé pour filtrer la première grandeur ($\lambda_1$) d'angle de roulis.

**20.** Dispositif selon au moins l'une des revendications 14 à 19, **caractérisé en ce qu'**au moins une unité d'évaluation comporte un circuit par lequel la deuxième grandeur ($\lambda_2$) d'angle de roulis est déterminée
à partir du taux de lacet ($\dot{\psi}^M$) et de la vitesse (v) du véhicule, en particulier à l'aide d'une ligne caractéristique (13) ou d'un champ de caractéristiques ou
à partir du taux de lacet ($\dot{\psi}^M$), de la vitesse (v) du véhicule et de l'accélération verticale ($\ddot{z}^M$) du véhicule.

**21.** Utilisation du procédé selon au moins l'une des revendications 1 à 13 dans l'un des systèmes suivants d'une moto : système de freinage à commande électronique, système d'éclairage en virage, système de train de roulement, système électrique de braquage et système de régulation de la dynamique de roulage.

Fig. 1

Fig. 2

$\ddot{y}^M$

16

$\ddot{z}^M$ → [ 16 ] → $\lambda'_2$ → [ c ] 17 → [ $f_{Trenn}$ ] 14' ┐
│
(+) → $\lambda_E$
15'
│
$\dot{\lambda}^M$ → [ ∫ ] 10 → $\lambda_1$ → [ $f_{Trenn}$ ] 11 ──────┘

Fig. 3

Fig. 4

Fig. 5

$\dot{\psi}_M$
$\dot{\lambda}_M$
$\dot{y}_M$
$\ddot{z}_M$

$\boxed{\phantom{xxxx}}$ 26

$\longrightarrow \lambda_E$

27

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10039978 C2
- DE 4244112 C2
- WO 0201151 A
- EP 1002709 A2